# EUROPÄISCHE PATENTSCHRIFT

(11) **EP 1 456 558 B1**
(45) Veröffentlichungstag und Bekanntmachung des Hinweises auf die Patenterteilung: **10.10.2007**
(21) Anmeldenummer: 02785405.8
(22) Anmeldetag: 22.11.2002
(51) Int. Cl.: F16G 13/16

(54) **KETTENGLIED EINER ENERGIEFÜHRUNGSKETTE ZUMINDEST TEILWEISE AUS NACHWACHSENDEM ROHSTOFF AUSGEBILDET, SOWIE VERFAHREN ZUR HERSTELLUNG EINES SOLCHEN, UND ENERGIEFÜHRUNGSKETTE**
CHAIN LINK FOR A POWER TRANSMISSION CHAIN AT LEAST PARTLY EMBODIED FROM RECYCLABLE MATERIAL, METHOD FOR PRODUCTION THEREOF AND POWER TRANSMISSION CHAIN
MAILLON D'UNE CHAINE DE TRANSMISSION D'ENERGIE CONSTITUEE AU MOINS PARTIELLEMENT DE MATIERE RECYCLABLE, SON PROCEDE DE REALISATION, ET CHAINE DE TRANSMISSION D'ENERGIE

(30) Priorität: 17.12.2001 DE 10162066
(43) Veröffentlichungstag der Anmeldung: 15.09.2004
(73) Patentinhaber: Kabelschlepp GmbH, 57074 Siegen (DE)
(72) Erfinder: WEHLER, Herbert, 57290 Neunkirchen (DE); SCHULZ, Jörg, 51766 Ründeroth (DE)
(74) Vertreter: Neumann, Ditmar
(86) Internationale Anmeldenummer: PCT/EP2002/013120
(87) Internationale Veröffentlichungsnummer: WO 2003/052291

(56) Entgegenhaltungen:
- EP-A- 0 822 353
- DE-A- 3 806 400
- DE-A- 19 934 871
- DE-C- 359 223
- US-A- 6 029 437
- US-A- 6 161 372

## Beschreibung

Die Erfindung bezieht sich auf ein Kettenglied einer Energieführungskette, ein Verfahren zur Herstellung eines solchen, sowie auf eine Energieführungskette.

Der Stand der Technik kennt eine Vielzahl von Kettengliedern für Energieiuhrungsketten, die unterschiedlichste Formen aufweisen, sowie aus unterschiedlichsten Materialien hergestellt werden. Bekannt sind z. B. Kettenglieder, die aus Kunststoff, Metall, oder einer Kombination aus Kunststoff und Metall ausgebildet sind. Es ist auch vorbekannt, verschiedene Kunststoffe in einem Kettenglied zu kombinieren. Beispielsweise offenbart die DE 38 06 400 C2 eine Energieführungskette, bei der jeweils zwei benachbarte Kettenglieder aus unterschiedlichen thermoplastischen Kunststoffen gefertigt werden. Hierdurch soll der Abrieb zwischen zwei benachbarten Kettengliedern verringert werden.

Bei allen bisher bekannten Kettengliedern für Energieführungsketten liegt jedoch nach Überschreiten der Lebensdauer des Kettengliedes ein Entsorgungsproblem vor. Sowohl die Kunststoffe, als auch die Metalle sind im Regelfall verrottungsfest und müssen aufbereitet werden, z. B. indem die Kunststoffe gesäubert, gemahlen und eingeschmolzen werden. Zudem beruhen alle bisher verwendeten Kunststoffe auf einer Aufbereitung von Kohlenwasserstoffen, die im Regelfall z. B. aus Erdöl gewonnen werden. Erdöl liegt bekanntlich in nur begrenztem Umfang vor, so dass nachhaltiges Wirtschaften mit diesem Rohstoff nötig ist.

Davon ausgehend ist es Aufgabe der Erfindung, ein Kettenglied für eine Energiefühnuigskette bereitzustellen, das ähnliche funktionale Eigenschaften wie herkömmliche Kettenglieder aufweist, dabei aber einfach zu entsorgen und umweltfreundlich herzustellen ist, sowie ein Verfahren zur Herstellung eines solchen Kettengliedes. Weiterhin ist Aufgabe der Erfindung, eine entsprechende Energieführungskette bereitzustellen.

Erfindungsgemäß wird diese Aufgabe durch ein Kettenglied mit den Merkmalen des Anspruchs 1, ein Verfahren zur Herstellung eines Kettengliedes oder Teile eines solchen mit den Merkmalen des Anspruchs 13, sowie eine Energieführungskette mit den Merkmalen gemäß Anspruch 20 gelöst. Weitere vorteilhafte Ausbildungen und Ausgestaltungen des Kettengliedes, sowie des Verfahrens sind Gegenstand der jeweiligen abhängigen Ansprüche.

Ein erfindungsgemäßes Kettenglied ist mindestens teilweise ausgebildet aus einer Zusammensetzung, welche mindestens einen nachwachsenden Rohstoff, ein diesen nachwachsenden Rohstoff verbindendes Material, sowie ggf. Hilfs- und/oder Zusatzstoffe enthält.

Hierbei bestehen z. B. 50 bis 95 Gew.-% der Zusammensetzung aus dem nachwachsenden Rohstoff, 5 bis 40 Gew.-% der Zusammensetzung aus ein diesen nachwachsenden Rohstoff verbindendes Material und 0 bis 10 Gew.-% aus Hilfs- und Zusatzstoffen. Jedoch sind auch andere Zusammensetzungen mit deutlich davon abweichenden Gewichtsprozentanteilen möglich und erfindungsgemäß. Ein solches Kettenglied, das zu einem großen Teil aus einem nachwachsenden Rohstoff besteht, hat im Vergleich zu herkömmlichen Kettengliedern z. B. aus Kunststoff einige ganz entscheidende Vorteile. Einerseits ist es in der Herstellung deutlich preisgünstiger als bei Verwendung eines Kunststoffes ähnlicher Qualität, zum zweiten weist es eine deutlich bessere ökologische Bilanz auf als ein Kunststoff. Weiterhin ist es nach Überschreiten der Lebensdauer des Kettengliedes deutlich einfacher und umweltschonender zu entsorgen. Beispielsweise ist eine Verbrennung unter vorteilhafter Ausnutzung des Brennwertes des Kettengliedes möglich. Da vorzugsweise der überwiegende Teil des Kettengliedes aus einem biologisch abbaubaren Material besteht, kann durch geeignete Verfahren eine sehr schnelle Verrottung des Kettengliedes, z. B. in einer Kompostieranlage erzielt werden.

Gerade in Zeiten schwindender Rohstoffe besonders im Bereich der fossilen Brennstoffe, wie Erdöl, ist es ungeheuer wichtig, Produkte herzustellen, die eine möglichst gute ökologische Bilanz aufweisen, um nachhaltig mit den begrenzt vorhandenen Rohstoffreserven zu wirtschaften. Von daher ist es bei Massenprodukten wie z. B. Kettengliedern für Energieführungsketten vorteilhaft, diese bei gleichen und/oder genügend guten Materialeigenschaften aus nachwachsenden Rohstoffen herzustellen.

Gemäß einer bevorzugten Ausführungsform besteht das Kettenglied aus einer Zusammensetzung aus nachwachsendem Rohstoff und diesen verbindendem Material, wobei ein Massenverhältnis im Bereich von 3 / 2 bis 19 / 1, insbesondere von 17 / 3 vorliegt. Besonders das Massenverhältnis von 17/3 hat sich als vorteilhaft erwiesen, da hier ein Großteil der Zusammensetzung aus dem nachwachsenden Rohstoff besteht, also eine gute ökologische Bilanz vorliegt, wobei der kleine Anteil des den nachwachsenden Rohstoff verbindenden Materials hinreichend groß ist, dass alle für den Betrieb einer Energieführungskette wichtigen Materialeigenschaften erreicht werden.

Nach einer weiteren vorteilhaften Ausgestaltung weist das Kettenglied mindestens eine, vorzugsweise jede, der folgenden Eigenschaften auf:
a) Eine Zugfestigkeit nach DIN 53455 von mindestens 20 N/mm², vorzugsweise mindestens 25 N/mm² und besonders bevorzugt im Bereich von 30 bis 200 N/mm²,
b) eine Reißdehnung nach DIN 53455 von mindestens 0,5 %, vorzugsweise mindestens 0,8 %,
c) ein Zugelastizitätsmodul nach DIN 53455 von wenigstens 4000 N/mm², vorzugsweise von wenigstens 5000 N/mm²,
d) eine Biegefestigkeit nach DIN 53432 von wenigstens 40 N/mm², vorzugsweise mindestens 100 N/mm² und besonders bevorzugt im Bereich von 100 bis 200 N/mm²,
e) eine Randfaserdehnung nach DIN 53452 von etwa 2 %,
f) ein Biegelastizitätsmodul nach DIN 53452 von wenigstens 3000 N/mm², vorzugsweise wenigstens 3500 N/mm²,
g) eine Schlagzähigkeit nach DIN 53453 von wenigstens 4 kJ/m², vorzugsweise wenigstens 6 kJ/m²,
h) eine Kerbschlagzähigkeit nach DIN 53453 von wenigstens 2,5 kJ/m²,
i) eine Kugeldruckhärte nach DIN 53456 von wenigstens 50 N/mm², vorzugsweise wenigstens 150 N/mm², besonders bevorzugt im Bereich von 180 bis 250 N/mm²,
j) eine Dichte nach DIN 53479 von wenigstens 1,2 g/cm³, besonders bevorzugt wenigstens 1,35 g/cm³,
k) eine Schlagzugzähigkeit nach DIN 53448 von etwa 15 kJ/m².

Jede einzelne der vorstehend genannten Eigenschaften stellt eine erfindungsgemäße Ausführungsform dar. Jede mögliche Kombination einer oder mehrerer der durch die Buchstaben a) bis k) gekennzeichneten Eigenschaften stellen ebenfalls bevorzugte Ausführungsformen der Erfindung-dar. Bei Kombination verschiedener Eigenschaften sind Kombinationen von zwei bis elf Eigenschanen möglich und erfindungsgemäß.

Bei einer weiteren vorteilhaften Ausführungsform ist das Kettenglied aus einer Zusammensetzung hergestellt, bei der der nachwachsende Rohstoff ein Polysaccharid, vorzugsweise Zellstoff, ist. In diesem Zusammenhang sind weiterhin besonders bevorzugt nachwachsende Rohstoffe aus einem Stoff aus der Gruppe von Holz, Flachs, Hanf, Stroh, Wolle, Sisal, Baumwolle, Leinen, Heu, Reisschalen, Bambus, Papyrus, Schilf, Kork oder ähnlichem oder auch aus Mischungen von mindestens zwei davon. All dies sind nachwachsende Rohstoffe, die oftmals auch als Abfallprodukt in Herstellungsprozessen für andere Produkte auftreten. Bisher war eine Entsorgung dieser Abfallprodukte kostenaufwendig oder auch umweltschädlich. Jedes dieser faserhaltigen oder faserigen Materialien kann zur Herstellung von Kettengliedern Verwendung finden. So ist es möglich, Abfälle aus der Holzindustrie oder auch aus der Bekleidungsindustrie, aus der Nahrungsmittelindustrie oder auch anderen Industrien zweckmäßig und ökologisch sinnvoll weiter zu verwenden. Dadurch wird die ökologische Bilanz der verwendeten Stoffe noch weiter verbessert, ein nachhaltiges Wirtschaften mit den Rohstoffen ist möglich. Weiterhin werden dadurch die vorhandenen begrenzten Ressourcen an Kohlenwasserstoffen geschont.

Gemäß einer weiteren vorteilhaften Ausführung des Kettengliedes ist das verbindende Material ein Polymer, vorzugsweise ein Elastomer. Hierbei können beispielsweise thermoplastische Elastomere Verwendung finden, es bieten sich Polymere aus der Gruppe der Amid-, Ester-, Olefin-, Styrol- oder Urethanelastomere an. Es ist auch möglich, Mischungen von mehreren Polymeren aus einer oder mehreren dieser Gruppen zu verwenden.

Nach einer weiteren bevorzugten Ausführung des Kettengliedes ist das verbindende Material ein Polykohlenwasserstoff, vorzugsweise ein Polyolefin, vorzugsweise Polyethylen oder Polypropylen, besonders bevorzugt Polypropylen. Polypropylen bietet den Vorteil, dass es einerseits sehr leicht zu verarbeiten ist, und andererseits leicht abbaubar ist.

Gemäß einer noch weiteren vorteilhaften Ausgestaltung des Kettengliedes weist die Zusammensetzung zumindest einen Hilfs- oder Zusatzstoff auf, so dass der Flammpunkt des Kettengliedes bei über 150°C, bevorzugt über 200°C, besonders bevorzugt über 250°C liegt. Dies gestattet den Einsatz eines erfindungsgemäßen Kettengliedes sowohl unter starker Beanspruchung die mit einer relativ großen Erhitzung des Kettengliedes einhergehen, als beispielsweise auch in explosionsgefährdeten Räumen.

Gemäß einer noch weiteren vorteilhaften Ausgestaltung des Kettengliedes enthält die Zusammensetzung zumindest einen Hilfs- bzw. Zusatzstoff, so dass der Zündpunkt des Kettengliedes über 250°C, bevorzugt über 350°C, besonders bevorzugt über 400°C liegt. Auch dies ist vorteilhaft beim Betrieb einer Energieführungskette mit solchen Kettengliedern unter besonders beanspruchenden Einsatzbedingungen, oder auch in explosionsgefährdeten Räumen.

Die zugefügten Hilfs- bzw. Zusatzstoffe können nicht nur zur Veränderung des Zünd- und/oder Flammpunktes dienen, vielmehr können auch Zusatz- und Hilfsstoffe verwendet werden, die z. B. eine Abriebverbesserung bewirken. Hier würde sich beispielsweise Ruß anbieten. Weiterhin können Farbstoffe zugeführt werden, um das optische Erscheinungsbild der Energieführungskette zu verändern und bestimmten Bedingungen anzupassen. Zudem können beispielsweise Antioxidantien zugefügt werden, die eine Erhöhung der Lebensdauer der Kettenglieder bewirken können. Eine weitere Verbesserung der Lebensdauer lässt sich beispielhaft auch durch das Hinzufügen von Stabilisatoren erreichen. Weiterhin können Gleitmittel zugefügt werden, die die Zykluszeiten in der Produktion dieser Kettenglieder verkürzen oder auch ein besseres und leiseres Abrollverhalten der Kettenglieder bewirken, wenn diese eine Energiefiihrungskette bilden. Zudem sind Füllstoffe möglich, die Dichte und Tragfähigkeit der Kettenglieder vorteilhaft beeinflussen. Auch eine Vielzahl weiterer Hilfs- und Zusatzstoffe ist möglich und erfindungsgemäß.

Gemäß einer noch weiteren vorteilhaften Ausgestaltung des Kettengliedes kann dieses mit wenigstens einem Werkstoff beschichtet werden. Diese Beschichtung kann erfindungsgemäß auch lediglich auf Teilen oder einzelnen Teilbereichen des Kettengliedes aufgebracht sein. Dadurch können beispielsweise die Teile, die beim Abrollen der Kettenglieder aufeinander bzw. auf den Gleitflächen eines entsprechenden Führungskanals für Energieführungsketten besonders beansprucht werden, bezüglich ihres Abriebverhaltens verbessert werden. Es ist auch möglich, die Oberseite der Kettenglieder des Untertrums einer Energieführungskette mit einem relativ harten Werkstoff zu beschichten, während die darauf abrollenden Kettenglieder des Obertrums einer Energieführungskette mit einem relativ weichen Werkstoff beschichtet werden können oder auch umgekehrt. Dies hat vorteilhaft zur Folge, dass einerseits das Abriebverhalten und somit der Verschleiß der Kette reduziert, jedoch gleichzeitig die Geräuschentwicklung beim Abrollen der Kette deutlich vermindert werden kann.

Gemäß einer noch weiteren vorteilhaften Ausführung des Kettengliedes ist wenigstens ein Teil des Kettengliedes aus einem sich von der Zusammensetzung aus einem nachwachsenden Rohstoff, ein diesen nachwachsenden Rohstoff verbindendes Material und gegebenenfalls Hilfs- und Zusatzstoffen unterscheidenden Material ausgebildet. Besonders bevorzugt ist hierbei die Ausbildung wenigstens eines Teils des Kettengliedes aus Metall. Dies gestattet die Verwendung von Verstärkungsstrukturen aus Metall, die die Stabilität und die Haltbarkeit des Kettengliedes positiv beeinflussen, oder auch die Ausbildung von besonders beanspruchten Teilen des Kettengliedes aus Metall oder einem härteren Kunststoff.

Gemäß eines weiteren erfinderischen Gedankens wird ein Verfahren zur Herstellung wenigstens eines Teils eines Kettengliedes einer Energieführungskette vorgeschlagen, bei dem das wenigstens eine Teil aus einem Material enthaltend einen nachwachsenden Rohstoff und einem diesen verbindenden Werkstoff und gegebenenfalls Hilfs- oder Zusatzstoffen gespritzt oder extrudiert wird.

Ein solches Verfahren bietet den Vorteil, dass ein durch dieses Verfahren hergestelltes Kettenglied eine verbesserte ökologische Bilanz im Vergleich zu herkömmlichen Kettengliedern aufweist. Zudem ist ein solches Verfahren unter dem Gesichtspunkt des nachhaltigen Wirtschaftens vorteilhaft, dabei werden die endlichen Ressourcen nicht nachwachsender Rohstoffe, wie z. B. Erdöl, geschont. Weiterhin ist der Einsatz von Zusatz- bzw. Hilfsstoffen vorteilhaft möglich. Mit diesen lassen sich wesentliche Eigenschaften der Teile eines Kettengliedes verändern.

Zum Spritzen beziehungsweise Extrudieren können Standardwerkzeuge verwendet werden, jedoch ist es auch möglich, Spezialwerkzeuge, wie sie zum Beispiel in der DE 199 34 871 A1 vorgeschlagen werden, zu verwenden.

Der nachwachsende Rohstoff ist beispielsweise ein Polysaccharid, vorzugsweise Zellstoff. Solchen Zellstoff erhält man z. B. aus Holz, Flachs, Hanf, Stroh, Wolle, Sisal, Baumwolle, Leinen, Heu, Reisschalen, Bambus, Papyrus, Schilf, Kork oder ähnlichem, sowie auch aus Mischungen von mindestens zwei dieser Stoffe. All diese Stoffe fallen oftmals als Abfallprodukt von Herstellungsprozessen für andere Produkte an. Beispielsweise fallen Holzabfälle in der Möbelindustrie, und Leinen-, Woll- oder Baumwollabfälle in der Bekleidungsindustrie an. Somit ist es vorteilhafterweise möglich, diese Abfälle umweltschoriend und sinnvoll zu verwerten.

Weiterhin kann durch die Verwendung von Produkten aus solchen Zusammensetzungen eine ökologisch sinnvolle Verwertung von Produkten, deren Lebenszeit abgelaufen ist, verwirklicht werden. Beispielsweise können auf diese Art und Weise die in Möbelstücken vorhandenen Rohstoffe sinnvoll genutzt werden. Auch eine Verwendung von Altkleidern, Teppichböden etc. zur Herstellung von Teilen von Kettengliedern von Energieführungsketten ist möglich. Die so gewonnenen Fasern werden mit einem Material verarbeitet, das den nachwachsenden Rohstoff verbindet. Hierbei können vorteilhafterweise Polymere, vorzugsweise Elastomere eingesetzt werden. Auch ist der Einsatz eines Polywasserstoffs, vorzugsweise eines Polyolefins, vorzugsweise Polyethylen oder Polypropylen, besonders bevorzugt Polypropylen, möglich. Polypropylen bietet den Vorteil, dass es leicht zu verarbeiten und abbaubar ist.

Weiterhin können zur Herstellung von Kettengliedern aus einer Zusammensetzung aus einem nachwachsenden Rohstoff und einem diesen verbindenden Material, sowie gegebenenfalls Hilfs- bzw. Zusatzstoffe, die gleichen Werkzeuge, z. B. zum Spritzen oder Extrudieren, verwendet werden, die auch für normale Kunststoffe Verwendung finden. Folglich ist es nicht nötig, kostenintensiv neue Werkzeuge anzuschaffen oder vorhandene Werkzeuge umzubauen.

Weiterhin ist vorteilhaft, dass in der gleichen Maschine nicht nur Kettenglieder aus einer Zusammensetzung aus zumindest einem nachwachsenden Rohstoff und einem diesen verbindenden Material hergestellt werden können, sondern je nach Bedarf können auch Kettenglieder aus normalem Kunststoff, wie beispielsweise Polyamid, hergestellt werden.

Durch Beimengung zumindest eines entsprechenden Hilfs- oder Zusatzstoffs ist es möglich, Kettenglieder oder Teile von Kettengliedern herzustellen, deren Flammpunkt über 150°C, bevorzugt über 200°C und besonders bevorzugt über 250°C liegt. Dies gestattet den Einsatz solcher Kettenglieder auch unter besonderen Umständen, wie z. B. in explosionsgeschützten Räumen.

Durch Zufügung zumindest eines Hilfs- oder Zusatzstoffes ist es ferner möglich, die Zusammensetzung so zu ändern, dass der Zündpunkt des Kettengliedes bzw. des Teils eines Kettengliedes über 250°C, bevorzugt über 350°C, besonders bevorzugt über 400°C liegt. Dies ist eine Voraussetzung zum Einsatz solcher Kettenglieder z. B. in explosionsgefährdeten Räumen. ; .

Weiterhin können durch eine Herstellung der Kettenglieder unter Einsatz von Hilfs- bzw. Zusatzstoffen einzelne oder mehrere Eigenschaften des entstehenden Kettengliedes verändert werden. Beispielsweise kann das Abriebverhalten verbessert werden, z. B. durch die Beimengung von Ruß. Gleichermaßen können Farbe, Dichte und Gleiteigenschaften des Kettengliedes durch Zusatz von Farbstoffen, Füllstoffen und Gleitmitteln verbessert werden. Zudem kann die Lebensdauer des Kettengliedes positiv dadurch beeinflusst werden, dass Antioxidantien und/oder Stabilisatoren zugefügt werden.

Es ist zudem möglich, im Laufe des Verfahrens zur Herstellung eines Kettengliedes bzw. eines Teils eines Kettengliedes das Kettenglied mit wenigstens einem Werkstoff zu beschichten. Durch eine Beschichtung können die Kettenglieder auch in Umgebungen verwendet werden, in denen diese aggressiven Medien ausgesetzt sind. Eine solche Beschichtung ist auch teilweise möglich, so dass z. B. besonders belastete Bereiche des Kettengliedes beschichtet, oder auch das gesamte Kettenglied beschichtet werden kann. Dadurch kommt es beispielsweise vorteilhafterweise zu Abriebverbesserungen im Kettenglied, oder auch zu einer Reduzierung der Geräuschentwicklung beim Abrollen der Kette. Aus Kostengründen ist es auch möglich, nur die vom Abrieb betroffenen Teile des Kettengliedes zu beschichten.

Gemäß einer vorteilhaften Ausgestaltung des Verfahrens liegt eine Verarbeitungstemperatur im Bereich von 130 bis 250°C, insbesondere im Bereich von 160 bis 195°C. Gegebenenfalls kann gemäß einer noch weiteren vorteilhaften Ausgestaltung des Verfahrens mit einem Nachdruck von wenigstens 200 bar für wenigstens 1 sec, bevorzugt wenigstens 300 bar für wenigstens 1 sec, besonders bevorzugt wenigstens 350 bar für wenigstens 1,5 sec gearbeitet werden.

Gemäß einer noch weiteren vorteilhaften Ausgestaltung des Verfahrens wird wenigstens ein Teil des Kettengliedes aus einem sich von der Zusammensetzung aus einem nachwachsenden Rohstoff, einem diesen nachwachsenden Rohstoff verbindendem Material und ggf. Hilfs- und Zusatzstoffen unterscheidenden Material gebildet. Dies gestattet vorteilhafterweise beispielsweise die Ausführung von Stegen oder Trennelementen in anderen Materialien, z. B. aus Metallen oder herkömmlichen Kunststoffen, je nach Einsatzgebiet der Führungskette durchzuführen. Somit können die Eigenschaften des herzustellenden Kettengliedes individuell an die Einsatzgegebenheiten und die sich daraus ergebenden Ansprüche an das Kettenglied angepasst werden.

Gemäß einer noch weiteren vorteilhaften Ausgestaltung des Verfahrens wird wenigstens ein Teil des Kettengliedes aus Metall gebildet. Dies ermöglicht vorteilhafterweise die Umspritzung von Verstärkungseinheiten wie zum Beispiel Gittern aus Metall mit der erfindungsgemäßen Zusammensetzung aus einem nachwachsenden Rohstoff, einem diesem verbindenden Material und gegebenenfalls Hilfs- und Zusatzstoffen, die der Verstärkung des Kettengliedes und einer längeren Haltbarkeit dienen. Auch ist es möglich, die besonders vom Abrieb betroffenen Teile eines Kettengliedes aus Metall auszubilden, oder auch die Bereiche, an denen beim Betrieb einer aus Kettengliedern zusammengesetzten Energieführungskette besonders große Kräfte angreifen.

Einer weiteren vorteilhaften Ausgestaltung des Verfahrens folgend wird ein Mehrkomponentenspritzverfahren eingesetzt. Dies gestattet es, in einem Spritzvorgang gleichmäßig oder nacheinander verschiedene Teile eines Kettengliedes aus unterschiedlichen Materialien zu spritzen. So ist es beispielsweise möglich, die Laschen eines Kettengliedes aus einer Zusammensetzung aus nachwachsendem Rohstoff, verbindendem Material und gegebenenfalls Hilfs- bzw. Zusatzstoffen zu spritzen und zumindest einen Quersteg aus den üblichen Kunststoffen, z. B. aus Polyamid auszubilden. Mit einem Mehrkomponentenspritzverfahren ist es auch möglich, in einem Arbeitsgang eine Beschichtung zumindest von Teilen des Kettengliedes vorzunehmen.

Nach einem noch weiteren erfinderischen Gedanken wird eine Energieführungskette vorgeschlagen, die wenigstens ein Kettenglied mit den Merkmalen der Ansprüche 1 bis 10 und/oder wenigstens ein Kettenglied hergestellt nach einem Verfahren gemäß den Ansprüchen 11 bis 15 enthält, vorgeschlagen. Eine solchermaßen aufgebaute Energieführungskette weist alle Vorteile, die weiter oben beschrieben wurden, wie eine verbesserte ökologische Bilanz und eine preiswerte Herstellung auf.

Weitere Einzelheiten und Vorteile eines erfindungsgemäßen Kettengliedes und eines Verfahrens zur Herstellung eines Kettengliedes werden anhand der in der Zeichnung dargestellten bevorzugten Ausführungsbeispiele erläutert, jedoch ist die Erfindung nicht auf diese beschränkt.

### Es zeigen:

- Figur 1: schematisch in einer Vorderansicht ein erstes Ausführungsbeispiel eines Kettengliedes,
- Figur 2: eine Schnittdarstellung entlang der Linie A-A der Figur 1,
- Figur 3: ein U-förmiges Kettengliedteil,
- Figur 4: einen Kern eines weiteren Ausführungsbeispiels eines Kettengliedteils,
- Figur 5: ein erfindungsgemäßes Kettengliedteil mit einem Kern nach Fig. 4,
- Figur 6: das erfindungsgemäße Kettengliedteil in einer Draufsicht und im Schnitt entlang einer Mittellinie A in Fig. 5,
- Figur 7: das Kettengliedteil nach Fig. 1 in einer Draufsicht und im Schnitt entlang der Schnittlinie B-B in Fig.5,
- Figur 8: das Kettengliedteil nach Fig. 4 in einer Seitenansicht von links und im Vollschnitt, und

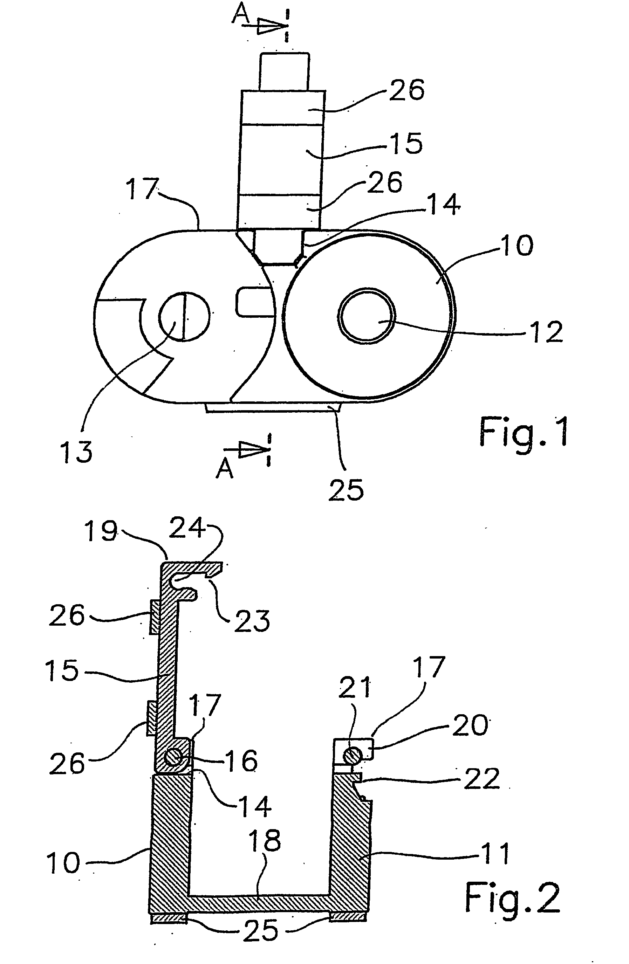

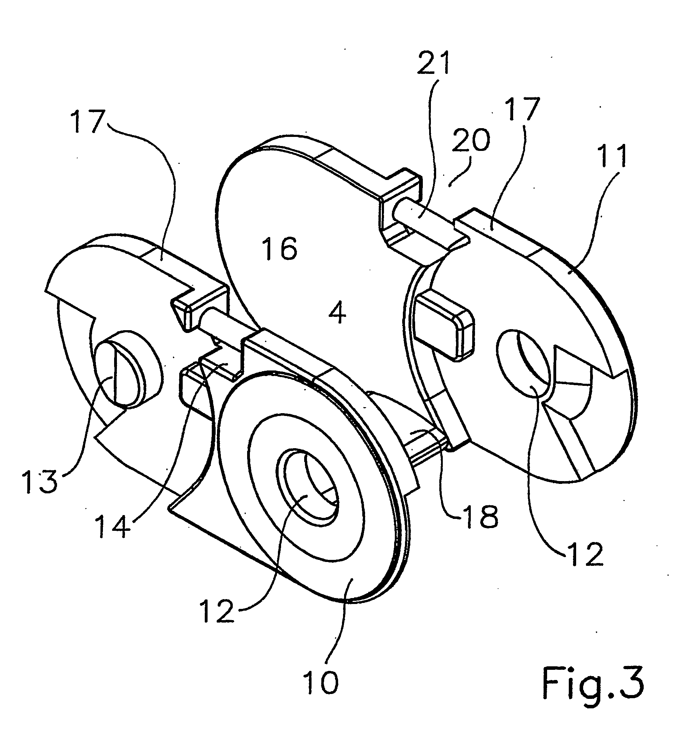

Figuren 1 bis 3 zeigen ein erstes Ausführungsbeispiel eines erfindungsgemäßen Kettengliedes. Hierbei zeigt die Fig. 3 schematisch und in einer perspektivischen Darstellung ein U-förmiges Kettengliedteil.

Das Kettenglied ist zumindest teilweise aus einer Zusammensetzung hergestellt, die einen nachwachsenden Rohstoff und ein diesen verbindendes Material enthält. Gegebenenfalls können Hilfs- bzw. Zusatzstoffe zugefügt werden, die bestimmte Eigenschaften des Kettengliedes verbessern. Zum Beispiel können Hilfs- bzw. Zusatzstoffe zugefügt werden, die den Flamm- und/oder den Zündpunkt des Kettengliedes erhöhen oder auch das Abriebverhalten und die Geräuschentwicklung beim Betrieb einer aus diesen Kettengliedern hergestellten Energieführungskette vermindern.

Als nachwachsender Rohstoff wird in diesem Ausführungsbeispiel Holz verwendet, jedoch ist auch die Verwendung von Flachs, Hanf, Stroh, Wolle, Sisal, Baumwolle, Leinen, Heu, Reisschalen, Bambus, Papyrus, Schilf, Kork oder ähnlichem oder Mischungen von mindestens zwei davon möglich. Das Holz kann beispielsweise in Form von Sägespänen, als kleine Pellets oder ähnliches bei der Herstellung der Zusammensetzung beigebracht werden. Als die Holzfasern verbindendes Material liegt in diesem Ausführungsbeispiel Polypropylen vor, jedoch können alle thermoplastischen Elastomere Verwendung finden, zum Beispiel Amid-, Ester-, Olefin-, Styrol- oder Urethanpolymere. Im vorliegenden Beispiel beträgt das Massenverhältnis von Holz zu Polypropylen 17/3.

Das Kettenglied ist für eine Energieführungskette vorgesehen, die aus einer Vielzahl solcher Kettenglieder bestehen kann. Energieführungsketten dienen zum Führen von Leitungen oder Schläuchen z. B. für elektrischen Strom, Wasser, Dampf, etc.

Das Kettenglied weist zwei zueinander beabstandete Laschen 10, 11 auf. In dem dargestellten Ausführungsbeispiel sind die Laschen 10, 11 mittels eines unteren starren Querstegs 18 miteinander verbunden. Jede Lasche 10, 11 weist an einem Endbereich eine Bohrung 12 auf. In dem gegenüberliegenden Endbereich der Laschen ist jeweils ein Zapfen 13 vorgesehen. Die Bohrungen 12 bzw. die Zapfen 13 der Kettenlaschen 10, 11 sind so ausgebildet, dass ein Zapfen 13 in die Bohrung 12 einer Kettenlasche eines benachbarten Kettengliedes eingebracht werden kann, so dass mehrere Kettenlaschen miteinander verbunden werden, die einen Strang bilden.

Ausgehend vom Rand 17 der Lasche 10 und quer zur Längserstreckung der Lasche 10 ist eine Ausnehmung 14 vorgesehen. Innerhalb der Ausnehmung 14 ist eine körperlich ausgebildete Gelenkachse 16 vorhanden, die einen Bestandteil der Lasche 10 bildet. Die Gelenkachse 16 weist einen kreisförmigen Querschnitt auf, wie dies aus der Figur 2 ersichtlich ist.

Um die Abriebfestigkeit zu verbessern oder auch die Geräuschentwicklung beim Betrieb einer aus Kettengliedern gebildeten Kette zu vermindern ist es erfindungsgemäß auch möglich, den Rand 17 der Lasche 10 und den entsprechenden Rand der Lasche 11 zu beschichten. Um dies zu erreichen, kann auch eine untere Ablage 25 und eine obere Ablage 26 an das Kettenglied angeformt werden. Die obere Ablage 26 ist an einem Quersteg 15 angeformt, während die untere Ablage 25 an den Laschen 10, 11 angeformt ist. Es ist erfindungsgemäß möglich, die Ablagen 25, 26 aus anderen Werkstoffen als der Zusammensetzung aus einem nachwachsenden Rohstoff, einem verbindenden Material und ggf. Hilfs- bzw. Zusatzstoffen zu formen. Weiterhin ist es erfindungsgemäß möglich, das gesamte Kettenglied zu beschichten, um Eigenschaften wie Haltbarkeit und Verrottungsfestigkeit zu verbessern.

Mit der Lasche 10 ist ein Quersteg 15 gelenkig verbunden. Beispielsweise kann dieser Quersteg 15 auch aus einem Material ausgebildet sein, das nicht der Zusammensetzung aus einem nachwachsenden Rohstoff und einem diesen verbindenden Material entspricht. Beispielsweise ist es möglich, den Quersteg 15 aus Kunststoff oder auch aus Metall auszubilden. Durch eine entsprechende Wahl der Materialien kann so das Kettenglied an praktisch jede denkbare Anforderung in Bezug auf Haltbarkeit, Preis, etc. angepasst werden. Figur 2 zeigt, dass ein Abschnitt des Quersteges 15 die Gelenkachse 16 nahtlos umgibt.

Der Quersteg 15 weist an seinem freien Ende einen Haken 19 auf. Der Haken 19 weist eine Hakennase 23 sowie eine Bolzenaufnahme 24 auf.

Ausgehend vom Längsrand 17 der Lasche 11 und quer zur Längserstreckung der Lasche 11 ist eine Hakenaufnahme 20 vorgesehen. Die Hakenaufnahme 20, wie sie insbesondere aus der Fig. 3 ersichtlich ist, weist einen in Längsrichtung der Lasche 11 verlaufenden Bolzen 21 auf. In der außenliegenden Wand der Lasche 11 ist ein Vorsprung 22 vorgesehen.

Der Quersteg 15 ist um die Gelenkachse 16 verschwenkbar. Im geschlossenen Zustand des Kettengliedes greift der Bolzen 21 in die Bolzenaufnahme 24 des Hakens 19. Unterhalb des Bolzens 21 ist der Vorsprung 22 ausgebildet, der mit der Hakennase 23 zusammenwirkt, so dass der Quersteg 15 lösbar mit der Lasche 11 verbindbar ist. Durch den Bolzen 21, der im geschlossenen Zustand in die Bolzenaufnahme 24 eingreift, wird verhindert, dass ein unbeabsichtigtes Öffnen des Querstegs 16 eintritt, wenn die Laschen 10, 11 relativ zueinander bewegt werden.

Das in den Figuren 1 und 2 dargestellte Kettenglied kann wie folgt hergestellt werden:

Zunächst werden die Laschen 10, 11 des Kettengliedes gebildet. Diese können aus der oben beschriebenen Zusammensetzung gebildet, beispielsweise gespritzt werden. Es ist auch möglich, nur eine der Laschen 10, 11 aus der oben beschriebenen Zusammensetzung herzustellen und die andere Lasche beispielsweise aus Kunststoff oder wenigstens teilweise aus Metall auszubilden.

Hierbei ist es durch Verwendung eines Mehrkomponentenspritzverfahrens möglich, zuerst die untere Auflage 25 zu spritzen, gegebenenfalls auch aus einem anderen Material, dass vorteilhafterweise das Abriebverhalten verbessert und die Geräuschentwicklung beim Betrieb einer Energieführungskette aus solchen Kettengliedern vermindert.

Zumindest die Lasche 10 weist eine Gelenkachse 16 auf. Danach wird der Quersteg 15 bei gleichzeitiger Ausformung einer Gelenkverbindung zwischen der Lasche 10 und dem Quersteg 15 gebildet. Auch bei der Materialwahl für den Quersteg 15 ist es möglich, ein anderes Material als für die Laschen 10, 11 oder auch das gleiche Material zu verwenden.

Es ist beispielsweise auch denkbar, den Quersteg 15 aus Metall und die Laschen 10, 11 aus der oben beschriebenen Zusammensetzung auszubilden.

Die untere Auflage 25 und die obere Auflage 26 können im Mehrspritzverfahren direkt aus einem anderen Werkstoff, zum Beispiel aus einem Kunststoff wie Polyamid gespritzt werden. Hierbei ist es möglich, dass die untere Auflage 25 und die obere Auflage 26 aus unterschiedlichen Werkstoffen gespritzt werden. So wird das Abriebverhalten verbessert. Kombiniert man Kettenglieder zu einer Energieführungskette, so ist es möglich, bei Verwendung von Kettengliedern mit unteren Auflagen aus entsprechenden unterschiedlichen Materialien für Ober- und Untertrum die Geräuschentwicklung beim Ablaufen der Energieführungskette zu vermindern. Dies ist vorteilhaft möglich, wenn Kettenglieder mit einer vergleichsweise harten oberen Auflage 26 für das Untertrum und Kettenglieder mit einer vergleichsweise weichen oberen Auflage 26 für das Obertrum oder umgekehrt verwendet werden. Erfindungsgemäß ist nicht nur möglich, die untere Auflage 25 und die obere Auflage 26 aus Kunststoff, sondern alternativ und/oder zusätzlich auch aus Metall auszubilden.

Das in den Fig. 1 bis 3 dargestellte Kettenglied weist ein U-förmiges Kettengliedteil, das durch die Laschen 10, 11 und den Quersteg 18 gebildet ist. Dies ist nicht zwingend notwendig. Der Quersteg 18 kann auch lösbar mit den Laschen 10, 11 verbunden sein. Für die Materialwahl bei der Herstellung des Quersteges 18 gilt entsprechend das bzgl. der Materialwahl der Quersteges 15 gesagte.

Es besteht auch die Möglichkeit, an einer der beiden Laschen jeweils zwei gelenkig mit der Lasche verbundene Querstege vorzusehen. Diese Querstege sind dann mit der gegenüberliegenden Lasche verbindbar. Es besteht auch die Möglichkeit, die Lasche 11 mit einem Quersteg 15 auszubilden, der gelenkig mit der Lasche 11 verbunden ist.

Bei der Herstellung der einzelnen Teile des Kettengliedes ist es erfindungsgemäß möglich, Zusatzstoffe in die Zusammensetzung aufzunehmen, die beispielsweise den Flammpunkt und den Zündpunkt erhöhen oder die Farbe des Kettengliedes ändern. Zudem können weitere Zusatz- bzw. Hilfsstoffe für eine verbesserte Lebensdauer verwendet werden, zum Beispiel Stabilisatoren oder Antioxidantien.

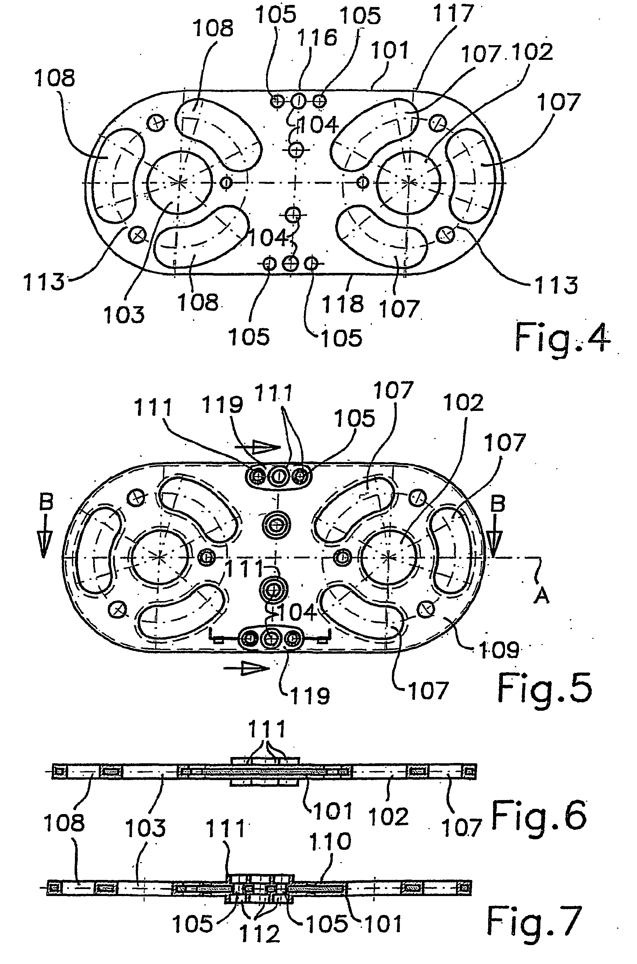

Fig. 4 zeigt einen Kern 101 für ein weiteres Ausführungsbeispiel eines Kettengliedteil. Der Kern 101 besteht aus einer Zusammensetzung aus einem nachwachsenden Rohstoff und einem diesen verbindendes Material, er kann jedoch auch aus Metall ausgebildet sein. Der Kern 101 ist im wesentlichen plattenförmig. Der Kern 101 weist zwei zueinander beabstandete Gelenkbohrungen 102, 103 auf. Die Gelenkbohrung 102 ist umgeben von drei bogenförmigen Ausnehmungen 107, die symmetrisch auf einem gedachten Kreisumfang 113 ausgebildet sind. Der gedachte Kreisumfang 113 ist koaxial zu der Gelenkbohrung 102. Die Gelenkbohrung 103 ist umgeben von drei Ausnehmungen 108, die bogenförmig ausgebildet sind. Die Ausnehmungen 108 liegen symmetrisch auf einem gedachten Kreisumfang 113, der koaxial zu der Gelenkbohrung 103 ist. Der Kern 101 ist spiegelsymmetrisch bezüglich der kurzen Mittelachse 116 ausgebildet. Die Längsränder 117, 118 des Kerns 101 verlaufen im wesentlichen senkrecht zu der kurzen Mittelachse 116. Auf der Mittelachse 116 sind im Abstand zueinander Bohrungen 104 ausgebildet. Im Bereich der Längsränder 117, 118 sind zusätzliche, im wesentlichen auf einer parallel zum Längsrand 117 bzw. 118 verlaufenden Linie liegenden, Bohrungen 105 ausgebildet. Zwischen zwei Bohrungen 105 liegt eine Bohrung 104.

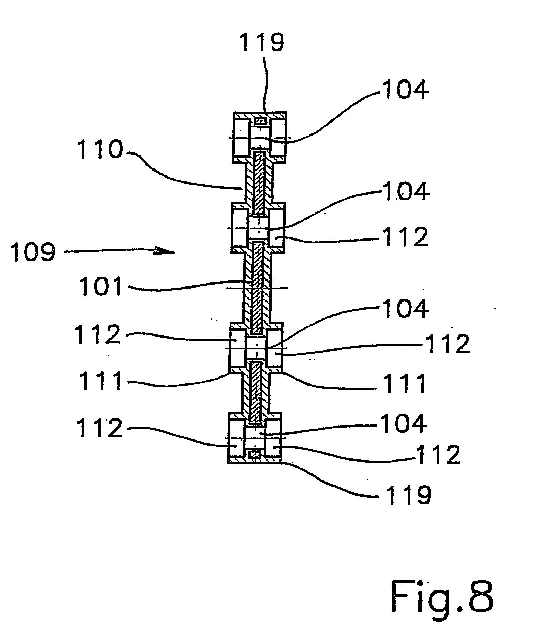

In der Fig. 5 ist ein Kettengliedteil 109 mit einem Kern 101 dargestellt. Die Figuren 6, 7 und 8 zeigen Schnittansichten des Kettengliedteils 109. Wie insbesondere aus den Figuren 6, 7 und 8 ersichtlich ist, ist der Kern 101 des Kettengliedteils 109 vollständig von einem Kernmantel 110 umgeben. Der Kernmantel 110 besteht aus einem Kunststoff, kann jedoch auch aus einer im Vergleich zur Zusammensetzung des Kerns 101 anderen Zusammensetzung aus einem nachwachsenden Rohstoff, einem diesen verbindenden Material und gegebenenfalls Hilfs- bzw. Zusatzstoffen bestehen. Es ist auch möglich, den Kern 101 aus Metall und den Kernmantel aus einem nachwachsenden Rohstoff, einem diesen verbindendes Material und gegebenenfalls Hilfs- bzw. Zusatzstoffen auszubilden, um so zum Beispiel die Festigkeit des Kettengliedes zu erhöhen. Eine entsprechende Ausbildung des Kernmantels 110 hat den Vorteil, dass die Kettenglieder auf die jeweilige Einsatzsituation angepasst hergestellt werden können. Bildet man den Kernmantel 110 aus Kunststoff aus, erhält man ein Kettenglied, dass die wesentlichen Eigenschaften eines herkömmlichen Kettengliedes wie Abrieb und Laufgeräusch aufweist, das jedoch im Vergleich zu einer reinen Kunststoffkette wesentlich umweltfreundlicher und deutlich preiswerter hergestellt werden kann.

Beim Kern 101 kann es sich vorzugsweise um eine Struktur, vorzugsweise um eine gitterartige Struktur handeln. Es besteht auch die Möglichkeit, den Bolzen und/oder einen Bolzenaufnahmekörper aus einem verschleißarmen Werkstoff, insbesondere Metall auszubilden. Der Bolzen und/oder der Bolzenaufnahmekörper wird dann von dem nachwachsenden Rohstoff, dem diesen verbindenden Material und gegebenenfalls Hilfs- und Zusatzstoffen teilweise umschlossen. Es ist erfindungsgemäß möglich, beliebige Teile des Kettengliedes aus verschleißarmen Werkstoffen, insbesondere Metall, auszubilden, wobei diese Teile umspritzt oder auch nachträglich angebracht werden können.

Die Gelenkbohrungen 102, 103 sowie die Ausnehmungen 107, 108 des Kettengliedteils 109 sind frei. Jede Bohrung 104, 105 ist von einem umlaufenden Kragen 111 umgeben. Jeder Kragen 111 begrenzt einen Kopfraum 112, in dem ein Schraubenkopf versenkbar ist. Der Kragen 111 der nebeneinander liegenden Bohrungen 105, 104, 105 ist durch einen gemeinsamen Fortsatz 119 gebildet.

### Bezugszeichenliste

- 10: Lasche
- 11: Lasche
- 12: Bohrung
- 13: Zapfen
- 14: Ausnehmung
- 15: Quersteg
- 16: Gelenkachse
- 17: Rand
- 18: Quersteg
- 19: Haken
- 20: Hakenaufnahme
- 21: Bolzen
- 22: Vorsprung
- 23: Hakennase
- 24: Bolzenaufnahme
- 25: Untere Auflage
- 26: Obere Auflage
- 101: Kern
- 102: Gelenkbohrung
- 103: Gelenkbohrung
- 104: Bohrung
- 105: Bohrung
- 107: bogenförmige Ausnehmung
- 108: bogenförmige Ausnehmung
- 109: Kettengliedteil
- 110: Kernmantel
- 111: Kragen
- 112: Kopfraum
- 113: Kreisumfang
- 116: kurze Mittelachse
- 117: Längsrand
- 118: Längsrand
- 119: Fortsatz

## Patentansprüche

1. Kettenglied einer Energieführungskette, mindestens teilweise ausgebildet aus einer Zusammensetzung, mindestens enthaltend:
a. einen nachwachsenden Rohstoff,
b. ein diesen nachwachsenden Rohstoff verbindendes Material,
c. gegebenenfalls Hilfs- und Zusatzstoffe.

2. Kettenglied nach Anspruch 1, wobei die Zusammensetzung aus nachwachsendem Rohstoff und verbindendem Material ein Massenverhältnis im Bereich von 3/2 bis 19/1, insbesondere von 17/3 aufweist.

3. Kettenglied nach einem der vorhergehenden Ansprüche, wobei die Zusammensetzung mindestens eine, vorzugsweise jede, der folgenden Eigenschaften aufweist:
A) eine Zugfestigkeit nach DIN 53455 von mindestens 20 N/mm², vorzugsweise mindestens 25 N/mm² und besonders bevorzugt im Bereich von 30 bis 200 N/mm²,
B) einer Reißdehnung nach DIN 53455 von mindestens 0,5 %, vorzugsweise mindestens 0,8 %.
C) ein Zugelastizitätsmodul nach DIN 53455 von wenigstens 4000 N/mm², vorzugsweise von wenigstens 5000 N/mm²,
D) eine Biegefestigkeit nach DIN 53432 von wenigstens 40 N/mm², vorzugsweise mindestens 100 N/mm² und besonders bevorzugt im Bereich von 100 bis 200 N/mm²,
E) eine Randfaserdehnung nach DIN 53452 von etwa 2 %,
F) ein Biegeelastizitätsmodul nach DIN 53452 von wenigstens 3000 N/mm², vorzugsweise wenigstens 3500 N/mm²,
G) eine Schlagzähigkeit nach DIN 53453 von wenigstens 4 kJ/m², vorzugsweise wenigstens 6 kJ/m²,
H) eine Kerbschlagzähigkeit nach DIN 53453 von wenigstens 2,5 kJ/m²,
I) eine Kugeldruckhärte nach DIN 53456 von wenigstens 50 N/mm², vorzugsweise wenigstens 150 N/mm², besonders bevorzugt im Bereich von 180 bis 250 N/mm²,
J) eine Dichte nach DIN 53479 von wenigstens 1,2 g/cm³, besonders bevorzugt wenigstens 1,35 g/cm³,
K) eine Schlagzugzähigkeit nach DIN 53448 von wenigstens 15 kJ/m².

4. Kettenglied nach einem der vorhergehenden. Ansprüche, wobei der nachwachsende Rohstoff ein Polysaccharid, vorzugsweise Zellstoff ist.

5. Kettenglied nach einem der vorhergehenden Ansprüche, wobei der nachwachsende Rohstoff aus einem Stoff aus der Gruppe von Holz, Flachs, Hanf, Stroh, Wolle, Sisal, Baumwolle, Leinen, Heu, Reisschalen, Bambus, Papyrus, Schilf, Kork oder ähnlichem oder aus Mischungen von mindestens zwei davon ausgewählt ist.

6. Kettenglied nach einem der vorhergehenden Ansprüche, wobei das verbindende Material ein Polymer, vorzugsweise ein Elastomer ist.

7. Kettenglied nach einem der vorherigen Ansprüche, **dadurch gekennzeichnet, dass** das verbindende Material ein Polykohlenwasserstoff, vorzugsweise ein Polyolefin, vorzugsweise Polyethylen oder Polypropylen, besonders bevorzugt Polypropylen ist.

8. Kettenglied nach einem der vorherigen Ansprüche, **dadurch gekennzeichnet, dass** durch zumindest einen Hilfs- bzw. Zusatzstoff der Flammpunkt des Kettengliedes über 150° C, bevorzugt über 200° C, besonders bevorzugt über 250° C liegt.

9. Kettenglied nach einem der vorherigen Ansprüche, **dadurch gekennzeichnet, dass** durch zumindest einen Hilfs- bzw. Zusatzstoff der Zündpunkt des Kettengliedes über 250° C, bevorzugt über 350° C, besonders bevorzugt über 400° C liegt.

10. Kettenglied nach einem der vorherigen Ansprüche, **dadurch gekennzeichnet, dass** das Kettenglied zumindest teilweise mit wenigstens einem Werkstoff beschichtet ist.

11. Kettenglied nach einem der vorherigen Ansprüche, **dadurch gekennzeichnet, dass** wenigstens ein Teil des Kettengliedes aus einem sich von der Zusammensetzung aus einem nachwachsenden Rohstoff, ein diesen nachwachsenden Rohstoff verbindendes Material und gegebenenfalls Hilfs- und Zusatzstoffen unterscheidenden Material ausgebildet ist.

12. Kettenglied nach Anspruch 11, **dadurch gekennzeichnet, dass** das wenigstens ein Teil des Kettengliedes aus Metall ausgebildet ist.

13. Verfahren zur Herstellung wenigstens eines Teiles eines Kettengliedes einer Energieführungskette, bei dem das wenigstens eine Teil aus einem Material enthaltend einen nachwachsenden Rohstoff, ein diesen verbindendes Material und gegebenenfalls einem Hilfs- bzw. Zusatzstoff gespritzt oder extrudiert wird.

14. Verfahren nach Anspruch 13, **dadurch gekennzeichnet, dass** eine Verarbeitungstemperatur im Bereich von 130 bis 250° Celsius, insbesondere im Bereich von 160° bis 195° Celsius liegt.

15. Verfahren nach einem der Ansprüche 13 oder 14, **dadurch gekennzeichnet, dass** mit einem Nachdruck von wenigstens 200 bar für wenigstens 1 Sekunde, vorzugsweise wenigstens 300 bar für wenigstens 1 Sekunde und besonders bevorzugt wenigstens 350 bar für wenigstens 1,5 Sekunden gearbeitet wird.

16. Verfahren nach einem der Ansprüche 13 bis 15, bei dem wenigstens ein Bereich des Kettengliedes mit einer Beschichtung ausgebildet wird.

17. Verfahren nach einem der Ansprüche 13 bis 16, bei dem wenigstens ein Teil des Kettengliedes aus einem sich von der Zusammensetzung aus einem nachwachsenden Rohstoff, ein diesen nachwachsenden Rohstoff verbindendes Material und gegebenenfalls Hilfs- und Zusatzstoffe unterscheidenden Material gebildet wird.

18. Verfahren nach einem der Ansprüche 13 bis 17, **dadurch gekennzeichnet, dass** wenigstens ein Teil des Kettengliedes aus Metall gebildet wird.

19. Verfahren nach einem der Ansprüche 13 bis 18, **dadurch gekennzeichnet, dass** ein Mehrkomponentenspritzverfahren eingesetzt wird.

20. Energieführungskette enthaltend wenigstens ein Kettenglied mit den Merkmalen der Ansprüche 1 bis 12, und/oder ein Kettenglied hergestellt nach einem Verfahren gemäß den Ansprüchen 13 bis 19.

## Claims

1. A chain link of a power transmission chain formed of a composition comprising:
a. a recyclable raw material
b. a binding material binding the recyclable raw material,
c. if necessary, auxiliary materials and additives.

2. The chain link of claim 1, wherein the composition of the recyclable raw material and connecting material has a weight ratio in the range of 3/2 to 19/1, in particular of 17/3.

3. The chain link according to one of the preceding claims, wherein the composition has at least one, preferably each of the following characteristics:
A) a tensile strength according to DIN 53455 of at least 20 N/mm², preferably at least 25 N/mm² and more preferably in the range of 30 to 200 N/mm²,
B) an elongation at tear according to DIN 53455 of at least 0,5 %, preferably at least 0,8 %;
C) a tensile modulus of elasticity according to DIN 53455 of at least 4000 N/mm², preferably at least 5000 N/mm²,
D) a bending strength according to DIN 53432 of at least 40 N/mm², preferably at least 100 N/mm² and especially in the range from 100 to 200 N/mm2,
E) an edge fiber elongation according to DIN 53452 of about 2 %,
F) bending modulus of elasticity according to DIN 53452 of at least 3.000 N/mm², preferably of at least 3500 Nmm²,
G) an impact resistance according to DIN 53453 of at least 4 kJ/m², preferably at least 6 kJ/m²,
H) a notch impact resistance according to DIN 53453 of at least 2,5 kJ/m²,
I) a ball impression hardness according to DIN 53456 of at least 50 N/mm², preferably at least 150 N/mm², particularly preferred in the range from 180 to 250 N/mm²,
J) a density according to DIN 53479 of at least 1,2 g/cm³, particularly preferred at least 1,35 g/cm³,
K) an impact tension resistance according to DIN 53448 of about 15 kJ/m².

4. The chain link according to one of the preceding claims, wherein the recyclable raw material is a polysaccharide, preferably cellulose.

5. The chain link according to one of the preceding claims, wherein the recyclable raw material is selected from a group consisting of: wood, flax, hemp, straw, wool, sisal, cotton, linen, hay, rice husks, bamboo, papyrus, reed, cork and the like or from mixtures of at least two thereof.

6. The chain link according to one of the preceding claims, wherein the binding material is a polymer, preferably an elastomer.

7. The chain link according to one of the preceding claims, **characterized in that** the binding material is a polyhydrocarbon, preferably a. polyolefin, preferably polyethylene or polypropylene, particularly preferred polypropylene.

8. The chain link according to one of the preceding claims, **characterized in that** at least an auxiliary agent or an additive enables the flash point of the chain link to be greater than 150°C, preferably greater than 200°C, particularly preferred greater than 250°C.

9. The chain link according to one of the preceding claims, **characterized in that**, at least an auxiliary agent or an additive enables the point of self ignition of the chain link to be greater than 250°C, preferably greater than 350°C, particularly preferred greater than 400°C.

10. The chain link according to one of the preceding claims, **characterized in that** the chain link is at least partially coated with at least one material.

11. The chain link according to one of the preceding claims, **characterized in that** at least one portion of the chain link is formed of a material different from the composition of a recyclable raw material, a material binding said recyclable raw material and if necessary auxiliary agents and additives.

12. The chain link according to claim 11, **characterized in that** the at least one portion of the chain link is made of metal.

13. A method for producing at least one portion of a chain link of a power transmission chain, wherein the at least one portion is injection molded or extruded from a material comprising a recyclable raw material, a binding material binding the recyclable raw material and if necessary an auxiliary agent and an additive respectively.

14. The method according to claim 13, **characterized in that** a processing temperature is in the range of 130 to 250 °C, in particular in the range of 160° to 195° Celsius.

15. The method according to one of the claims 13 or 14, **characterized in that** the process is carried out with an additional compression of at least 200 bar for at least one second, preferably at least 300 bar for at least one second, and particularly preferred at least 350 bar for at least 1,5 seconds.

16. The method according to one of claims 13 to 15, wherein at least one portion of the chain link is formed with a coating.

17. The method according to one of claims 13 to 16, wherein at least one portion of the chain link is formed from a material, which is different from the composition of recyclable raw material, a material binding this recyclable raw material and eventually auxiliary material and additives.

18. The method according to one of claims 13 to 17, **characterized in that** at least one portion of the chain link is formed from metal.

19. The method according to one of claims 13 to 18, **characterized in that** a multi-component injection molding process is utilized.

20. Power transmission chain comprising at least one chain link with the features of claims 1 to 12 and/or a chain link made by a method according to claims 13 to 19.

## Revendications

1. Maillon de chaîne d'une chaîne de transmission d'énergie réalisé au moins partiellement d'une composition contenant au moins :
a. une matière première renouvelable,
b. un matériau reliant cette matière première renouvelable,
c. le cas échéant des matières auxiliaires et des additifs.

2. Maillon de chaîne selon la revendication 1, la composition de matière première renouvelable et de matériau liant ayant un rapport de masse dans la gamme de 3/2 à 19/1, notamment de 17/3.

3. Maillon de chaîne selon l'une des revendications précédentes, la composition ayant au moins une, de préférence chacune des propriétés suivantes :
A) une résistance à la traction selon DIN 53455 d'au moins 20 N/mm², de préférence au moins 25 N/m² et particulièrement préféré dans la marge de 30 à 200 N/mm²,
B) un allongement à la rupture selon DIN 53455 d'au moins 0,5 %, de préférence d'au moins 0,8 %,
C) un module d'élasticité à la traction selon DIN 53455 d'au moins 4000 N/mm², de préférence d'au moins 5000 N/mm²,
D) une résistance à la flexion selon DIN 53432 d'au moins 40 N/mm², de préférence d'au moins 100 N/mm² et particulièrement préféré dans la marge de 100 à 200 N/mm²,
E) un allongement de fibres en bout selon DIN 53452 d'environ 2%,
F) un module d'élasticité de flexion selon DIN 53452 d'au moins 3000 N/mm², de préférence au moins 3500 N/mm²,
G) une résistance au choc selon DIN 53453 d'au moins 4 kJ/m², de préférence au moins 6 kJ/m²,
H) une résilience au choc sur barreau entaillé selon DIN 53453 d'au moins 2,5 kJ/m²,
I) une dureté à la pénétration de la bille selon DIN 53456 d'au moins 50 N/mm², de préférence 150 N/mm², particulièrement préféré dans la marge de 180 à 250 N/mm²,
J) une densité selon DIN 53479 d'au moins 1,2 g/cm³, particulièrement préféré au moins 1,35 g/cm³,
K) une résilience à la traction selon DIN 53448 d'au moins 15 kJ/m².

4. Maillon de chaîne selon l'une des revendications précédentes, la matière première renouvelable étant un polysaccharide, de préférence de la cellulose.

5. Maillon de chaîne selon l'une des revendications précédentes, la matière première renouvelable étant choisie d'une matière parmi le groupe contenant du bois, du lin, du chanvre, de la paille, de la laine, du sisal, du coton, du lin, du foin, des pelures de riz, du bambous, du papyrus, des roseaux, du liège ou semblables ou des mélanges d'au moins deux de ces derniers.

6. Maillon de chaîne selon l'une des revendications précédentes, le matériau liant étant un polymère, de préférence un élastomère.

7. Maillon de chaîne selon l'une des revendications précédentes, **caractérisé en ce que** le matériau liant est un polyhydrocarbure, de préférence un polyoléfine, de préférence du polyéthylène ou du polypropylène.

8. Maillon de chaîne selon l'une des revendications précédentes, **caractérisé en ce que** grâce à au moins une matière auxiliaire, respectivement un additif, le point d'inflammation du maillon de chaîne est supérieur à 150°C, de préférence supérieur à 250°C.

9. Maillon de chaîne selon l'une des revendications précédentes, **caractérisé en ce que** grâce à au moins une matière auxiliaire, respectivement un additif, le point d'ignition du maillon de chaîne est supérieur à 250°C, de préférence supérieur à 350°C, particulièrement préféré supérieur à 400°C.

10. Maillon de chaîne selon l'une des revendications précédentes, **caractérisé en ce que** le maillon de chaîne est au moins partiellement revêtu d'au moins un matériau.

11. Maillon de chaîne selon l'une des revendications précédentes, **caractérisé en ce qu'**au moins une partie du maillon de chaîne est réalisée d'un matériau différent d'une composition de matière première renouvelable, d'un matériau reliant cette matière première renouvelable et le cas échéant de matières auxiliaires et d'additifs.

12. Maillon de chaîne selon la revendication 11, **caractérisé en ce que** l'au moins une partie du maillon de chaîne est réalisée de métal.

13. Procédé destiné à la fabrication d'au moins une partie d'un maillon de chaîne d'une chaîne de transmission d'énergie, dans lequel l'au moins une partie est moulée par injection ou extrudée d'un matériau contenant une matière première renouvelable, un matériau reliant cette matière première renouvelable et le cas échéant une matière auxiliaire, respectivement un additif.

14. Procédé selon la revendication 13, **caractérisé en ce qu'**une température de traitement est située dans la marge de 130 à 250°C, notamment dans la marge de 160 à 195 °Celsius.

15. Procédé selon l'une des revendications 13 ou 14, **caractérisé en ce qu'**on travaille avec une post-pression d'au moins 200 bar pendant au moins une seconde, de préférence au moins à 300 bar pendant au moins une seconde et particulièrement préféré au moins à 350 bar pendant au moins 1,5 secondes.

16. Procédé selon l'une des revendications 13 à 15, dans lequel au moins une région du maillon de chaîne est dotée d'un revêtement.

17. Procédé selon l'une des revendications 13 à 16, dans lequel au moins une partie du maillon de chaîne est formée d'un matériau différent de la composition de matière première renouvelable, d'un matériau reliant cette matière première renouvelable et le cas échéant de matières auxiliaires et d'additifs.

18. Procédé selon l'une des revendications 13 à 17, **caractérisé en ce qu'**au moins une partie du maillon de chaîne est formée de métal.

19. Procédé selon l'une des revendications 13 à 18, **caractérisé en ce qu'**on utilise un procédé de moulage par injection à plusieurs constituants.

20. Chaîne de transmission d'énergie, contenant au moins un maillon de chaîne avec les caractéristiques des revendications 1 à 12 et/ou un maillon de chaîne fabriqué selon un procédé conforme aux revendications 13 à 19.
